# EUROPEAN PATENT APPLICATION

(11) **EP 2 600 041 A1**
(43) Date of publication of application: **05.06.2013**
(21) Application number: 12176656.2
(22) Date of filing: 17.07.2012
(51) Int. Cl.: F16J 15/06

(54) **Recess for O-ring**

(30) Priority: 01.12.2011 KR 20110127509
(71) Applicant: LG Innotek Co., Ltd., Seoul 100-714 (KR)
(72) Inventor: Ryu, Woongseon, 100-714 Seoul (KR)
(74) Representative: Novagraaf Technologies

(57) **Abstract**

Disclosed is a recess (110) for O-ring (200), the recess including both lateral walls (111) facing the O-ring formed each in a convexly curved shape toward the O-ring, and a floor surface (112) connected to the curved lateral walls (111), wherein each of the curved lateral walls and the floor surface is formed at a first part (100) to have a depth smaller than a diameter of the O-ring, and a surface facing a second part (120) opposite to the first part is opened.

## Description

### CROSS-REFERENCE TO RELATED APPLICATION

The present application is based on, and claims priority from the Korean Application Number 10-2011-0127509, filed on December 1, 2011, the disclosure of which is incorporated by reference herein in its entirety.

### BACKGROUND OF THE DISCLOSURE

### 1. Field of the Disclosure

The present disclosure relates to a recess for inserting an O-ring.

### Discussion of the Related Art

This section provides background information related to the present disclosure which is not necessarily prior art.

### Generally,

An O-ring, which functions as a sealing member, is disposed in an annular recess to provide a sealing engagement and/or to form a fluid tight seal at a coupled area between two different parts. At this time, a recess is generally provided to accommodate and to restrict the O-ring at a predetermined position. The recess may be provided in a shape corresponding to that of the O-ring or in a shape flat in a floor surface.

However, in a case the recess for insertion of O-ring is formed in a shape having a square cross-section at a floor surface, the O-ring may frequently deviate from an original location when a pressure is applied to a sealing unit which is assembled on an opposite part using the O-ring.

In a case the O-ring is deviated from the original location, problems arise that it is difficult to maintain an intended or designed fluid tightness by using the O-ring.

It is, therefore, desirable to overcome the above problems and others by providing an improved recess for O-ring.

### SUMMARY OF THE DISCLOSURE

This section provides a general summary of the disclosure, and is not a comprehensive disclosure of its full scope or all of its features.

The present disclosure is directed to cope with the abovementioned problems/disadvantages and it is an object of the present disclosure to provide a recess for O-ring configured to improve an O-ring insertion groove structure, thereby enhancing fluid tightness of the O-ring.

Technical problems to be solved by the present disclosure are not restricted to the above-mentioned description, and any other technical problems not mentioned so far will be clearly appreciated from the following description by the skilled in the art.

In a general aspect of the present disclosure, there is provided a recess for O-ring (hereinafter referred to as O-ring insertion recess), the recess comprising: both lateral walls facing the O-ring formed each in a convexly curved shape toward the O-ring; and a floor surface connected to the curved lateral walls, wherein each of the curved lateral walls and the floor surface is formed at a first part to have a depth smaller than a diameter of the O-ring, and a surface facing a second part opposite to the first part is opened.

Preferably, but not necessarily, the recess is formed at a peripheral surface of the first part.

Preferably, but not necessarily, a connection part between the curved lateral wall and the floor surface is rounded.

Preferably, but not necessarily, a length of the floor surface is smaller than a diameter of the O-ring.

Preferably, but not necessarily, the floor surface is narrower than a width of an upper surface opened for insertion of the O-ring.

In another general aspect of the present disclosure, there is provided a recess for O-ring, the recess comprising: a curved lateral wall convexly formed toward the O-ring at one wall surface of the O-ring; and a floor surface connected to the curved lateral walls, wherein the curved lateral wall and the floor surface are formed at a first part to have a depth smaller than a diameter of the O-ring, and a surface facing a second part opposite to the first part is opened.

Preferably, but not necessarily, the recess is formed at a peripheral surface of the first part.

Preferably, but not necessarily, a connection part between the curved lateral wall and the floor surface is rounded.

Preferably, but not necessarily, a length of the floor surface is smaller than a diameter of the O-ring.

Preferably, but not necessarily, the floor surface is narrower than a width of an upper surface opened for insertion of the O-ring.

Preferably, but not necessarily, the curved wall surface is formed at a wall surface tightly contacted by allowing the O-ring interfering with the second part to be deformed in response to an insertion operation of the second part. Preferably, but not necessarily, the first part is a bearing housing, and the second part is a pipe-shaped axial member inserted and coupled by the bearing housing.

The O-ring insertion recess according to the present disclosure has an advantageous effect in that, in a case a first part mounted with the O-ring is coupled to a second part, the O-ring interfering with the second part is deformed in response to insertion operation of the second part to form a curved wall surface on both the contacted wall surface and a wall surface opposite to the contacted wall surface, such that even if the O-ring is assembled in a state where the O-ring is deviated from an original location, the first and second parts are coupled to enable maintenance of fluid tightness when the O-ring is compressed, and a space in which the O-ring is deformed can be increased to maintain a maximally fluid tight sealed state between the first and second parts.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present disclosure will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### BRIEF DESCRIPTION OF THE DRAWINGS

The accompanying drawings, which are included to provide a further understanding of the present disclosure and are incorporated in the present disclosure and constitute a part of this application, and together with the description, serve to explain the principle of the disclosure. In the drawings:
FIG. 1 is a schematic lateral view of a first part provided with an O-ring insertion recess according to an exemplary embodiment of the present disclosure;
FIG. 2 is a schematic lateral view illustrating a state where an O-ring is inserted into an O-ring insertion recess according to the present disclosure;
FIG. 3 is a schematic view illustrating a state prior to a first part with an O-ring inserted into an O-ring insertion recess and a second part, an object of the first part, being coupled;
FIG. 4 is a schematic view illustrating a state where a first part with an O-ring inserted into an O-ring insertion recess and a second part, an object of the first part, are coupled according to a first exemplary embodiment of the present disclosure; and
FIG. 5 is a schematic view illustrating a state where a first part with an O-ring inserted into an O-ring insertion recess and a second part, an object of the first part, are coupled according to a second exemplary embodiment of the present disclosure.

### DETAILED DESCRIPTION

Advantages and features of the present disclosure may be understood more readily by reference to the following detailed description of exemplary embodiments and the accompanying drawings. Detailed descriptions of well-known functions, configurations or constructions are omitted for brevity and clarity so as not to obscure the description of the present disclosure with unnecessary detail. Thus, the present disclosure is not limited to the exemplary embodiments which will be described below, but may be implemented in other forms. In the drawings, the width, length, thickness, etc. of components may be exaggerated or reduced for the sake of convenience. Furthermore, throughout the descriptions, the same reference numerals will be assigned to the same elements in the explanations of the figures, and explanations that duplicate one another will be omitted. Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification. The terms "a" and "an" herein do not denote a limitation of quantity, but rather denote the presence of at least one of the referenced item.

Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification.

As may be used herein, the terms "substantially" and "approximately" provide an industry-accepted tolerance for its corresponding term and/or relativity between items. Such an industry-accepted tolerance ranges from less than one percent to ten percent and corresponds to, but is not limited to, component values, angles, et cetera.

Now, a recess for an O-ring according to the exemplary embodiments of the present disclosure will be described in detail with reference to the accompanying drawings.

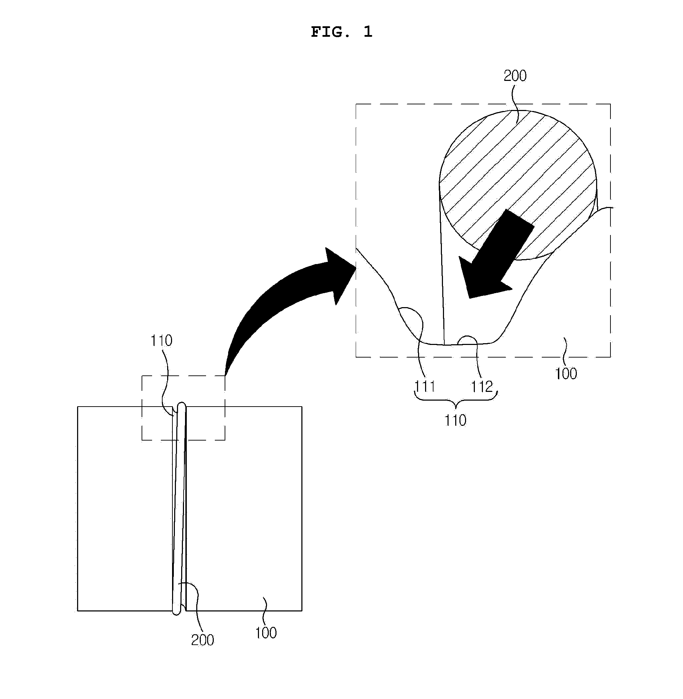

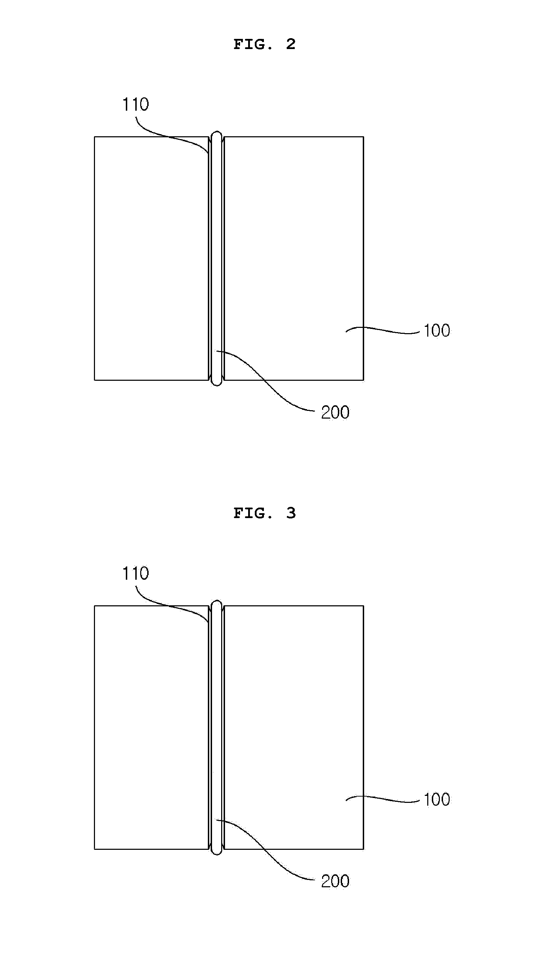

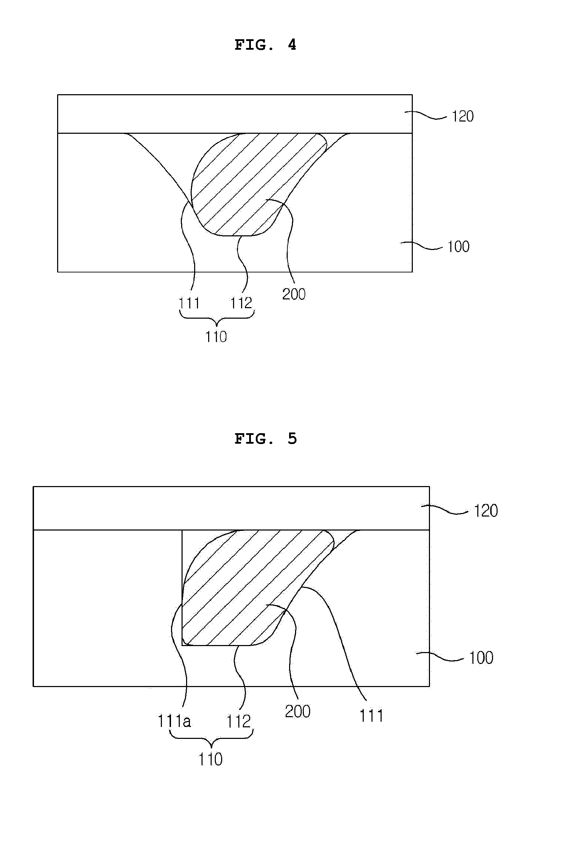

FIG.1 is a schematic lateral view of a first part provided with an O-ring insertion recess according to an exemplary embodiment of the present disclosure, FIG.2 is a schematic lateral view illustrating a state where an O-ring is inserted into an O-ring insertion recess according to the present disclosure, FIG. 3 is a schematic view illustrating a state prior to a first part with an O-ring inserted into an O-ring insertion recess and a second part, an object of the first part, being coupled, FIG.4 is a schematic view illustrating a state where a first part with an O-ring inserted into an O-ring insertion recess and a second part, an object of the first part, are coupled according to a first exemplary embodiment of the present disclosure, and FIG.5 is a schematic view illustrating a state where a first part with an O-ring inserted into an O-ring insertion recess and a second part, an object of the first part, are coupled according to a second exemplary embodiment of the present disclosure.

Referring to FIGS. 1 and 2, an O-ring insertion recess (110) according to a first exemplary embodiment of the present disclosure includes a curved lateral wall (111) and a floor surface (112), to which an O-ring (200) is coupled.

The O-ring insertion recess (110) may be formed at a peripheral surface of a first part (100). However, it is not limited thereto and any position may be acceptable as long as the O-ring insertion recess (100) is formed at a surface opposite to a second part coupled to the first part (100).

Referring to FIGS. 1 to 4, the curved lateral wall is preferably such that a surface opposite to the O-ring (200) is convexly formed, and a connection part with the floor surface (112) is preferably rounded.

A width of the floor surface (112) is narrower than a diameter of the O-ring (200), such that as shown in FIG.2, in a case the O-ring (200) is accommodated, a distal end of the O-ring (200) is not brought into contact with the floor surface until the first part (100) is coupled to a second part (120), and as shown in FIG.3, in a case the first and second parts (100, 120) are coupled, a portion of the O-ring protruded from the O-ring insertion recess (110) is applied with pressure to be deformed, where the deformed portion is preferably surface-contacted with the floor surface (112).

Meanwhile, as illustrated in FIGS. 1 to 4, the O-ring insertion recess (110) is provided in an upper-wide and lower-narrow shape (tapering off from an upper to a lower end), such that the O-ring can be more easily inserted into the O-ring insertion recess (110) over a conventional square or semi-circular insertion groove

Furthermore, even if the O-ring (200) is erroneously inserted to a wrong position, the O-ring (200) can descend along the curved lateral wall (111) by its own elasticity to be moved to an accurate position as shown in an arrow because the O-ring insertion recess (110) is formed with a narrow floor surface (112).

Now, referring to FIG.5, according to a second exemplary embodiment of the present disclosure, only one wall surface of the O-ring insertion recess (110) is formed with a curved wall surface (111), while an opposite wall surface thereof may be formed with a straight wall surface (111a) as in the conventional O-ring groove. In this case, the curved wall surface (111) functions to automatically move toward a floor surface of the inserting O-ring when the O-ring is inserted to thereby obtain the same advantageous effect as in the first exemplary embodiment of the present disclosure.

Furthermore, the O-ring insertion recess (110) according to the second exemplary embodiment of the present disclosure is applied to a case where a second part which is an opposite part of a first part is inserted into one direction as shown by an arrow of FIG.3. In this case, the O-ring (200) is elastically deformed to a direction being pushed as shown in FIG.5, where, a portion where the deformation is substantially generated is the pushed portion, such that a same advantageous effect can be obtained, even if only a wall surface opposite to the insertion direction is formed with the curved wall surface (111).

Meanwhile, the O-ring insertion recess according to the first and second exemplary embodiments of the present disclosure may be used for various mechanical parts, one example of which is to apply the O-ring insertion recess to coupling of a bearing housing to an axial member.

That is, the first part (100) may be provided in a peripheral surface of a bearing housing, and the second part (120) may be provided in a pipe-shaped member formed at an axial member inserted and coupled by the bearing housing. In this case, an inner side of the pipe-shaped second part (120) is coupled by the first part (100) provided in the shape of the bearing housing with the O-ring (200) disposed thereon. In a case this type of coupling is realized, the first part (100) of bearing housing and the pipe-shaped axial member of second part (120) may be maximally fluid tightly connected by the O-ring (200) of a maximally contacted area.

As apparent from the foregoing, the O-ring insertion recess thus configured according to the present disclosure has an industrial applicability in that a coupling force between the first and second parts (100, 120) can be greatly enhanced because an outer diameter of the curved lateral wall (111) is abruptly enlarged toward an opening inserted by the O-ring (200), such that even if the O-ring (200) is greatly deformed, a contacted area between the O-ring insertion recess (110) contacted by the O-ring (200) and the second part (120) (sealing engagement) is increased due to there being a sufficient space where the O-ring (200) can be deformed.

As a result, fluid tightness can be improved by the increased contact area of the O-ring (200), and movement resistance and twist resistance can be enhanced.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

## Claims

1. A recess for O-ring, the recess comprising:
both lateral walls facing the O-ring formed each in a convexly curved shape toward the O-ring; and
a floor surface connected to the curved lateral walls, wherein each of the curved lateral walls and the floor surface is formed at a first part to have a depth smaller than a diameter of the O-ring, and a surface facing a second part opposite to the first part is opened.

2. The recess of claim 1 formed at a peripheral surface of the first part.

3. The recess of claim 1, wherein a connection part between the curved lateral wall and the floor surface is rounded.

4. The recess of claim 1, wherein a length of the floor surface is smaller than a diameter of the O-ring.

5. The recess of claim 1, wherein the floor surface is narrower than a width of an upper surface opened for insertion of the O-ring.

6. A recess for O-ring, the recess comprising:
a curved lateral wall convexly formed toward the O-ring at one wall surface of the O-ring; and a floor surface connected to the curved lateral walls, wherein the curved lateral wall and the floor surface are formed at a first part to have a depth smaller than a diameter of the O-ring, and a surface facing a second part opposite to the first part is opened.

7. The recess of claim 6 formed at a peripheral surface of the first part.

8. The recess of claim 6, wherein a connection part between the curved lateral wall and the floor surface is rounded.

9. The recess of claim 6, wherein a length of the floor surface is smaller than a diameter of the O-ring.

10. The recess of claim 6, wherein the floor surface is narrower than a width of an upper surface opened for insertion of the O-ring.

11. The recess of claim 1, wherein the curved wall surface is formed at a wall surface tightly contacted by allowing the O-ring interfering with the second part to be deformed in response to an insertion operation of the second part.

12. The recess of claim 2, wherein the curved wall surface is formed at a wall surface tightly contacted by allowing the O-ring interfering with the second part to be deformed in response to an insertion operation of the second part.

13. The recess of claim 3, wherein the curved wall surface is formed at a wall surface tightly contacted by allowing the O-ring interfering with the second part to be deformed in response to an insertion operation of the second part.

14. The recess of claim 4, wherein the curved wall surface is formed at a wall surface tightly contacted by allowing the O-ring interfering with the second part to be deformed in response to an insertion operation of the second part.

15. The recess of claim 5, wherein the curved wall surface is formed at a wall surface tightly contacted by allowing the O-ring interfering with the second part to be deformed in response to an insertion operation of the second part.

16. The recess of claim 6, wherein the curved wall surface is formed at a wall surface tightly contacted by allowing the O-ring interfering with the second part to be deformed in response to an insertion operation of the second part.

17. The recess of claim 1, wherein the first part is a bearing housing, and the second part is a pipe-shaped axial member inserted and coupled by the bearing housing.

18. The recess of claim 2, wherein the first part is a bearing housing, and the second part is a pipe-shaped axial member inserted and coupled by the bearing housing.

19. The recess of claim 3, wherein the first part is a bearing housing, and the second part is a pipe-shaped axial member inserted and coupled by the bearing housing.

20. The recess of claim 4, wherein the first part is a bearing housing, and the second part is a pipe-shaped axial member inserted and coupled by the bearing housing.
